# EUROPEAN PATENT APPLICATION

(11) **EP 4 401 066 A1**
(43) Date of publication of application: **17.07.2024**
(21) Application number: 22891742.3
(22) Date of filing: 17.10.2022
(51) Int. Cl.: G09F 9/30

(54) **ELECTRONIC DEVICE**

(30) Priority: 15.11.2021 CN 202111347109
(71) Applicant: Huawei Technologies Co., Ltd., Shenzhen, Guangdong 518129 (CN)
(72) Inventor: DAI, Xiaotao, Shenzhen, Guangdong 518129 (CN); LUO, Zhongyuan, Shenzhen, Guangdong 518129 (CN); ZHAO, Yaoxu, Shenzhen, Guangdong 518129 (CN); LV, Chengling, Shenzhen, Guangdong 518129 (CN); MAO, Weihua, Shenzhen, Guangdong 518129 (CN); YU, Weidong, Shenzhen, Guangdong 518129 (CN); WANG, Chenglong, Shenzhen, Guangdong 518129 (CN)
(74) Representative: MERH-IP Matias Erny Reichl Hoffmann Patentanwälte PartG mbB
(86) International application number: PCT/CN2022/125599
(87) International publication number: WO 2023/082945

(57) **Abstract**

An electronic device (100a; 100b; 100c; 100d; or 100e) is provided. The electronic device includes a flexible display panel (110), a back plate (120), and a rotating shaft (130). The back plate (120) is disposed between the flexible display panel (110) and the rotating shaft (130); the flexible display panel (110) includes an expanding part (112 or 116) and a bending part (114) that are connected to each other, and the bending part (114) is configured to implement bending of the flexible display panel (110); the back plate (120) is provided with a first blind hole (121), and the first blind hole (121) is provided on a side of the back plate (120) and is away from the flexible display panel (110); the rotating shaft (130) is provided with a gap (131); and a surface of the flexible display panel (110) is used as a reference plane (P), and a projection of the first blind hole (121) on the reference plane (P) at least partially overlaps a projection of the gap (131) on the reference plane (P). The first blind hole (121) is provided, so that a broken bright dot, a black spot, a dead pixel, and other display detects on the flexible display panel (110) can be avoided, to improve a service life of the electronic device (100a; 100b; 100c; 100d; or 100e).

## Description

This application claims priority to Chinese Patent Application No. 202111347109.9, filed with the China National Intellectual Property Administration on November 15, 2021 and entitled "ELECTRONIC DEVICE", which is incorporated herein by reference in its entirety.

### TECHNICAL FIELD

This application relates to the field of electronic device technologies.

### BACKGROUND

With development of display technologies, foldable electronic devices are recognized by an increasing quantity of users. However, as a quantity of folding times increases, a broken bright dot, a black spot, a horizontal stripe, and other display detects are likely to occur on a flexible display panel of the foldable electronic device. Consequently, a service life of the electronic device is affected.

### SUMMARY

In view of this, this application provides an electronic device, to resolve a problem that a display defect is likely to occur or a service life is relatively short for an existing foldable electronic device.

According to a first aspect, this application provides an electronic device. The electronic device includes a flexible display panel, a back plate, and a rotating shaft, and the back plate is disposed between the flexible display panel and the rotating shaft. The flexible display panel includes an expanding part and a bending part that are connected, and the bending part is used for the flexible display panel to implement bending. The back plate is provided with a first blind hole, and the first blind hole is provided on a side of the back plate and is far away from the flexible display panel. The rotating shaft is provided a gap. A surface of the flexible display panel is used as a reference plane, and a projection of the first blind hole on the reference plane at least partially overlaps a projection of the gap on the reference plane. It should be understood that, the first blind hole is provided on the back plate, to reduce a bending stress of the back plate, so as to avoid a broken bright dot, a black spot, a dead pixel, a horizontal stripe, and other display detects on the flexible display panel, so that a service life of an electronic device using the back plate is improved. In addition, there is no hole on a side that is of the back plate and that faces the flexible display panel, so that pressure-resistance performance of the back plate can be improved.

In some manners, a thickness of the back plate may be 30 µm to 200 µm, and a depth of the first blind hole may be less than or equal to 195 µm. Based on this, a shape and the depth of the first blind hole, the thickness of the back plate, and the like are adjusted, so that the bending stress of the back plate may be adaptively adjusted. Therefore, the back plate can be used in the electronic device.

In some manners, a distance between adjacent first blind holes may be 5 µm to 100 µm. Based on this, the distance between the first blind holes is adjusted, so that the bending stress of the back plate may also be adaptively adjusted. Therefore, the back plate can be used in the electronic device.

In some manners, in a first direction, the first blind hole includes a first ring region, a first connection region, and a second ring region that are sequentially interconnected, and the first direction is a length direction of the electronic device; and in a second direction, sizes of the first ring region and the second ring region are both greater than a size of the first connection region, and the second direction is perpendicular to the first direction. Based on this, the first ring region and the second ring region may release internal stress of the back plate, and the connection part may reduce an overall hole-opening area of the first blind hole, to improve a pressure-resistance capability of the back plate.

In some manners, the back plate is further provided with a first through hole, and the first through hole and the first blind hole are provided at an interval. The surface of the flexible display panel is used as a reference plane, and a projection of the first through hole on the reference plane is spaced from a projection of the gap on the reference plane. It should be understood that, based on cooperation between the first blind hole and the first through hole, a total perforating area on the side that is of the back plate and that faces the flexible display panel is small, that is, a surface that is of the back plate and that faces the flexible display panel is flat. Therefore, an optically clear adhesive layer can be further prevented from being squeezed into the back plate to some extent, to avoid a horizontal stripe and other display detects in the electronic device.

In some manners, the surface of the flexible display panel is used as a reference plane, and a projection of the first through hole on the reference plane is located within the bending part of the flexible display panel. Based on this, the first through hole does not directly face the gap of the rotating shaft. Based on this, when a user presses a region that is of the flexible display panel and that is corresponding to the first through hole, the rotating shaft may provide support for the flexible display panel to some extent, to avoid a broken bright dot, a black spot, a dead pixel, and other display detects on the flexible display panel.

In some manners, a distance between a first blind hole and a first through hole that are adjacent to each other is 5 µm to 100 µm. Based on this, the distance between the first blind holes is adjusted, so that the bending stress of the back plate may also be adaptively adjusted. Therefore, the back plate can be used in the electronic device.

In some manners, the back plate is further provided with a second blind hole, and the second blind hole is located on a side of the back plate and is far away from the flexible display panel; and the surface of the flexible display panel is used as a reference plane, and a projection of the second blind hole on the reference plane is located within the expanding part. It should be understood that, based on the second blind hole, a weight of the back plate may be reduced, so that a weight of the electronic device may be reduced as a whole, to implement lightweightness of the electronic device.

In some manners, the back plate is further provided with a second through hole, the second through hole has a first diameter and a second diameter in a direction from the flexible display panel to the rotating shaft, and the first diameter is less than the second diameter. Based on this, the weight of the back plate may be reduced, so that the back plate can be used in an electronic device.

In some manners, the first diameter may be less than or equal to 300 µm. It should be understood that a thickness of a fingernail of a finger of a user is usually 0.3 mm to 0.8 mm, and the thickness is usually greater than the first diameter of the second through hole. Based on this, when the user performs a touch operation, even if the fingernail of the finger of the user touches a region that is of the flexible display panel and that is corresponding to the second through hole, the back plate can still provide support for the flexible display panel to some extent, to avoid a broken bright dot, a black spot, a dead pixel, and other display detects on the flexible display panel.

According to a second aspect, an embodiment of this application further provides another electronic device. The electronic device includes a flexible display panel, a back plate, and a rotating shaft, and the back plate is disposed between the flexible display panel and the rotating shaft. The flexible display panel includes an expanding part and a bending part that are connected, and the bending part is used for the flexible display panel to implement bending. The back plate is provided with a second through hole, and the second through hole is provided on a side of the back plate and is far away from the flexible display panel; and the second through hole has a first diameter and a second diameter in a direction from the flexible display panel to the rotating shaft, and the first diameter is less than the second diameter. The rotating shaft is provided with a gap; and a surface of the flexible display panel is used as a reference plane, and a projection of the second through hole on the reference plane at least partially overlaps a projection of the gap on the reference plane. It should be understood that the second through hole may also reduce local stress existing when the back plate is bent, to facilitate bending of the back plate. However, because the first diameter of the second through hole is small, a structure such as an optically clear adhesive layer can be prevented from being squeezed into the back plate to some extent, to improve pressure-resistance performance of the back plate.

In some manners, the first diameter of the second through hole may be less than or equal to 300 µm. It should be understood that a thickness of a fingernail of a finger of a user is usually 0.3 mm to 0.8 mm, and the thickness is usually greater than the first diameter of the second through hole. Based on this, when the user performs a touch operation, even if the fingernail of the finger of the user touches a region that is of the flexible display panel and that is corresponding to the second through hole, the back plate can still provide support for the flexible display panel to some extent, to avoid a broken bright dot, a black spot, a dead pixel, and other display detects on the flexible display panel.

In some manners, a distance between adjacent second through holes may be 5 µm to 100 µm. Based on this, a bending stress of the back plate can be adaptively adjusted by adjusting the distance of the second through holes, so that the back plate can be used in the electronic device.

In some manners, the surface of the flexible display panel is used as a reference plane, and the projection of the second through hole on the reference plane is located within the bending part, to reduce the bending stress of the back plate.

In some manners, the surface of the flexible display panel is used as a reference plane, and the projection of the second through hole on the reference plane is alternatively located within the expanding part, to reduce a weight of the back plate.

In some manners, the back plate is further provided with a second blind hole, and the second blind hole is located on a side of the back plate and is far away from the flexible display panel; and the surface of the flexible display panel is used as a reference plane, and a projection of the second blind hole on the reference plane is located within the expanding part. Based on the second blind hole, the weight of the back plate may also be reduced, to implement lightweightness of the electronic device.

In some manners, in a first direction, the first through hole includes a third ring region, a second connection region, and a fourth ring region that are sequentially interconnected, and the first direction is a length direction of the electronic device; and in a second direction, sizes of the third ring region and the fourth ring region are both greater than a size of the second connection region, and the second direction is perpendicular to the first direction. Based on this, the third ring region and the fourth ring region may release internal stress of the back plate, to reduce a bending stress of the back plate. The second connection region may reduce an overall hole-opening area of the first through hole, to prevent an optically clear adhesive layer from being squeezed into the back plate to some extent. This can avoid a horizontal stripe and other display detects on the electronic device.

In some manners, a distance between a second through hole and a first through hole that are adjacent to each other may be 5 µm to 100 µm. Based on this, the distance between the second through hole and the first through hole is adjusted, so that the bending stress of the back plate may also be adaptively adjusted. Therefore, the back plate can be used in the electronic device.

In some manners, the electronic device further includes an optically clear adhesive layer, and the optically clear adhesive layer is located between the flexible display panel and the back plate.

In some manners, a cross section shape of the first blind hole includes a trapezoid, an inverted trapezoid, a pentagon, a rectangle, an I-shaped shape, a cross shape, an arch shape, or a free-form curved surface shape.

In some manners, the back plate is a metal back plate, a metal matrix composite material back plate, a multilayer metal composite material back plate, or a non-metal material back plate.

According to a third aspect, this application further provides a method for processing a back plate. The processing method includes: performing local annealing on an arched part of a back plate, where an annealing temperature is 0.5 Tb, and Tb is a metal recrystallization temperature.

According to a fourth aspect, this application further provides a method for processing a back plate. The processing method includes: using a stainless steel electrode as a cathode and a back plate as an anode, and placing the back plate into an electrolyte for electrolysis.

In some manners, the electrolyte includes perchloric acid and acetic acid, and perchloric acid:acetic acid = 1:15.

In this application, the first blind hole is provided on the back plate, so that the back plate can have appropriate pressure-resistance performance while ensuring bending performance of the back plate, and can prevent the optically clear adhesive or the like from being squeezed into the back plate to some extent, to avoid a broken bright dot, a black spot, a dead pixel, a horizontal strip, and other display detects on the flexible display panel, and improve bending performance and a bending life of the electronic device.

### BRIEF DESCRIPTION OF DRAWINGS

FIG. 1 is a schematic diagram of a conventional foldable electronic device;
FIG. 2 is a schematic diagram of a flexible display panel, a back plate, and a rotating shaft according to an embodiment of this application;
FIG. 3 is a sectional view of a part of an electronic device according to an embodiment of this application;
FIG. 4 is a schematic diagram of a part of a back plate with a first blind hole according to an embodiment of this application;
FIG. 5 is a schematic diagram of a back plate according to another embodiment of this application;
FIG. 6 is a schematic diagram of a back plate according to still another embodiment of this application;
FIG. 7 is a schematic diagram of a back plate according to yet another embodiment of this application;
FIG. 8 is a schematic diagram of a back plate according to yet still another embodiment of this application;
FIG. 9 is a schematic diagram of a flexible display panel, a back plate, and a rotating shaft according to another embodiment of this application;
FIG. 10 is a sectional view of a part of an electronic device according to another embodiment of this application;
FIG. 11 is a schematic diagram of a flexible display panel, a back plate, and a rotating shaft according to another embodiment of this application;
FIG. 12 is a sectional view of a part of an electronic device according to still another embodiment of this application;
FIG. 13 is a schematic diagram of a part of a back plate with a first through hole according to an embodiment of this application;
FIG. 14 is a schematic diagram of a flexible display panel, a back plate, and a rotating shaft according to still another embodiment of this application;
FIG. 15 is a sectional view of a part of an electronic device according to yet another embodiment of this application;
FIG. 16 is a sectional view of a part of an electronic device according to a further embodiment of this application;
FIG. 17 is an enlarged diagram of a part of the electronic device in FIG. 16;
FIG. 18 is a flowchart of a method for processing a back plate according to an embodiment of this application;
FIG. 19 is a schematic diagram of a method for processing a back plate according to another embodiment of this application; and
FIG. 20 is a schematic diagram of a method for processing a back plate according to still another embodiment of this application.

### DESCRIPTION OF EMBODIMENTS

Terms in embodiments of this application are used only for the purpose of describing specific embodiments, but are not intended to limit this application. Terms "one", "a", "the", "the foregoing", "this", and "the one" of singular forms used in this specification and the appended claims of this application are also intended to include plural forms, unless otherwise specified in the context clearly.

Reference to "an embodiment", "some embodiments", or the like described in this specification indicates that at least one embodiment of this application includes a specific feature, structure, or characteristic described with reference to the embodiments. Therefore, statements such as "in an embodiment", "in some embodiments", "in some other embodiments", "in other embodiments" and "in some manners" that appear at different places in this specification do not necessarily mean reference to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

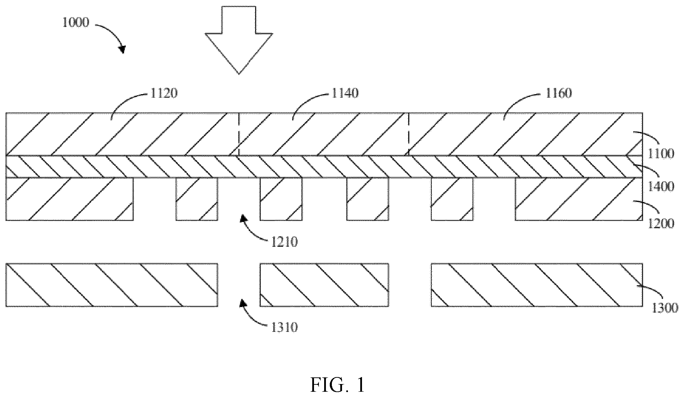

Referring to FIG. 1, a conventional foldable electronic device 1000 includes a flexible display panel 1100, a back plate 1200, and a rotating shaft 1300 that are sequentially disposed. The back plate 1200 is disposed between the flexible display panel 1100 and the rotating shaft 1300. The flexible display panel 1100 may be, for example, an OLED (Organic Light-Emitting Diode, organic light-emitting diode) panel. The flexible display panel 1100 may be bent to some extent under an external force, to implement multi-angle display of the electronic device 1000. The back plate 1200 may be fixedly connected to the flexible display panel 1100 by using an OCA (Optically Clear Adhesive, optically clear adhesive) layer 1400 or another structure, to support and protect the flexible display panel 1100. The rotating shaft 1300 may be located on a side of the back plate 1200 and far away from the flexible display panel 1100.

The rotating shaft 1300 may rotate, and enable the back plate 1200 and the flexible display panel 1100 on the rotating shaft 1300 to rotate synchronously, so that the electronic device 1000 has an expanded state, a folded state, or another state.

To implement bending, the flexible display panel 1100 may include a first expanding part 1120, a bending part 1140, and a second expanding part 1160. The bending part 1140 is located between the first expanding part 1120 and the second expanding part 1160. It should be understood that the bending part 1140 may enable the flexible display panel 1100 to implement a flexible bending function.

In some embodiments, the electronic device 1000 may have an expanded state and a folded state. For the electronic device that is bent inward, the expanded state may be a state in which an included angle between the first expanding part 1120 and the second expanding part 1160 is greater than or equal to 30°; and the folded state may be a state in which an included angle between the first expanding part 1120 and the second expanding part 1160 is less than 30°. For the electronic device that is bent outward, the expanded state may be a state in which an included angle between the first expanding part 1120 and the second expanding part 1160 is less than or equal to 330°; and the folded state may be a state in which an included angle between the first expanding part 1120 and the second expanding part 1160 is greater than 330°. It should be understood that, for the electronic device that is bent inward or outward, the expanded state of the electronic device may include that the included angle between the first expanding part 1120 and the second expanding part 1160 is equal to or approximately equal to 180°. It should be understood that, within an error tolerance range, a value of the included angle in the foregoing example may have a specific deviation, and is not necessarily limited to a precise included angle value.

For example, when the expanded state is 180°, the electronic device 1000 may be folded inward, and an included angle less than 180°, such as 90°, 100°, 110°, or 120°, is formed between the first expanding part 1120 and the second expanding part 1160 of the flexible display panel 1100. For another example, the electronic device 1000 may be folded outward, and an included angle greater than 180°, such as 270°, 315°, 330°, or 360°, is formed between the first expanding part 1120 and the second expanding part 1160 of the flexible display panel 1100.

In some other embodiments, the expanded state and the folded state of the electronic device 1000 may be adjusted based on an actual use requirement. This is not limited herein. For example, for the electronic device 1000 that is folded inward, the expanded state of the electronic device 1000 may alternatively mean that the included angle between the first expanding part 1120 and the second expanding part 1160 is greater than or equal to 45°.

It should be understood that, although terms such as "first expanding part" and "second expanding part" are used to describe parts of the flexible display panel in this specification, these expanding parts should not be limited by these terms. These terms are merely used to distinguish one expanding part from another expanding part. For example, the first expanding part may alternatively be named the second expanding part, and similarly the second expanding part may alternatively be named the first expanding part without departing from the scope of this application. Both the first expanding part and the second expanding part are expanding parts, but the first expanding part and the second expanding part may not be a same expanding part, or may be a same expanding part in some scenarios.

As described above, based on a use feature of the bendable flexible display panel 1100 or the electronic device 1000, the back plate 1200 of the electronic device 1000 further needs to have a specific bending stress while implementing functions of supporting and protecting the flexible display panel 1100. The bending stress may be an acting force required for the flexible display panel 1100 to deform. However, when the back plate 1200 is a single-layer board, for example, the back plate 1200 is a single-layer metal back plate 1200, based on a material feature of the back plate 1200, a bending stress of the back plate 1200 is usually large. As a result, the electronic device 1000 using the back plate 1200 is not easily bent, and folding performance and a folding life of the electronic device 1000 are affected.

As shown in FIG. 1, in order to make the back plate 1200 have an appropriately bending stress, a plurality of through holes 1210 may be provided on a middle portion of the back plate 1200 of the electronic device 1000. In terms of location, projections of the plurality of through holes 1210 on the flexible display panel 1100 may be within the bending part 1140 of the flexible display panel 1100. Based on this, rigidity of the back plate 1200 may be reduced, to correspondingly reduce a bending stress of the back plate 1200 and meet a bending requirement of the electronic device 1000.

However, because the back plate 1200 is disposed between the flexible display panel 1100 and the rotating shaft 1300, this manner of opening the through holes 1210 also causes a low pressure-resistance capability of the flexible display panel 1100. It should be understood that, in a region corresponding to the through hole 1210, the flexible display panel 1100 may communicate with the rotating shaft 1300. Correspondingly, a support force of the flexible display panel 1100 in the region corresponding to the through hole 1210 is low, and a pressure-resistance capability of the back plate 1200 is low. Some gaps 1310 also provided on a surface of the rotating shaft 1300. When a projection of the through hole 1210 of the back plate 1200 on the flexible display panel 1100 at least partially overlaps a projection of the gap 1310 of the rotating shaft 1300 on the flexible display panel 1100, a support force of the flexible display panel 1100 in the region corresponding to the through hole 1210 is lower. With an increase in a quantity of times of bending the electronic device 1000 or an increase in a quantity of times of tapping the flexible display panel 1100 by a user, a broken bright dot, a black spot, a dead pixel, and other display detects are more likely to occur on the flexible display panel 1100. Consequently, a service life of the electronic device 1000 is reduced.

For example, in a process in which the user taps the flexible display panel 1100 to implement a touch operation, because a region that is of the flexible display panel 1100 and that is corresponding to the through hole 1210 and the gap 1310 is usually corresponding to the middle portion of the flexible display panel 1100, a fingernail of a finger of the user tends to touch the region. As shown by an arrow in FIG. 1, the flexible display panel 1100 in the region is directly corresponding to the through hole 1210 and the gap 1310, and is not effectively supported. It may be predicted that, as a quantity of times of user tapping increases, the finger and the fingernail of the user also press the flexible display panel 1100 in the region more frequently, and a broken bright dot, a black spot, a dead pixel, and other display detects occur on the flexible display panel 1100.

In addition, an example in which the flexible display panel 1100 is firmly connected to the back plate 1200 by using the OCA layer 1400 is used. As a quantity of times of folding the electronic device 1000 increases, the OCA layer 1400 may also be partially squeezed into the through hole 1210 of the back plate 1200. Correspondingly, when the flexible display panel 1100 displays an image, a partially deformed light-and-shadow reflection change occurs, and consequently a horizontal stripe and other display detects occur.

For various problems existing in the foregoing conventional foldable electronic device 1000, the following embodiments of this application provide an electronic device. In the electronic device, a structure of a back plate is reconstructed, so that bending performance and pressure-resistance performance can be balanced in the back plate, so as to avoid a broken bright dot, a black spot, a dead pixel, a horizontal stripe, and other display detects on a flexible display panel, improving a service life of an electronic device using the back plate. In addition, there is no hole on a side that is of the back plate and that faces the flexible display panel, or a total perforating area is small, so that pressure-resistance performance of the back plate can be improved. Based on this, an OCA layer can be prevented from being squeezed into the back plate to some extent, to avoid a horizontal stripe and other display detects on the flexible display panel, and improve the service life of the electronic device.

It should be understood that the electronic device provided in the embodiments of this application may be, for example, a mobile phone, a tablet computer, a notebook computer, or a wearable display device. This is not limited herein.

In some other embodiments, the electronic device may alternatively be, for example, a vehicle-mounted display. Based on this, the vehicle-mounted display may be expanded when displaying is required, and the vehicle-mounted display may be folded when displaying is not required.

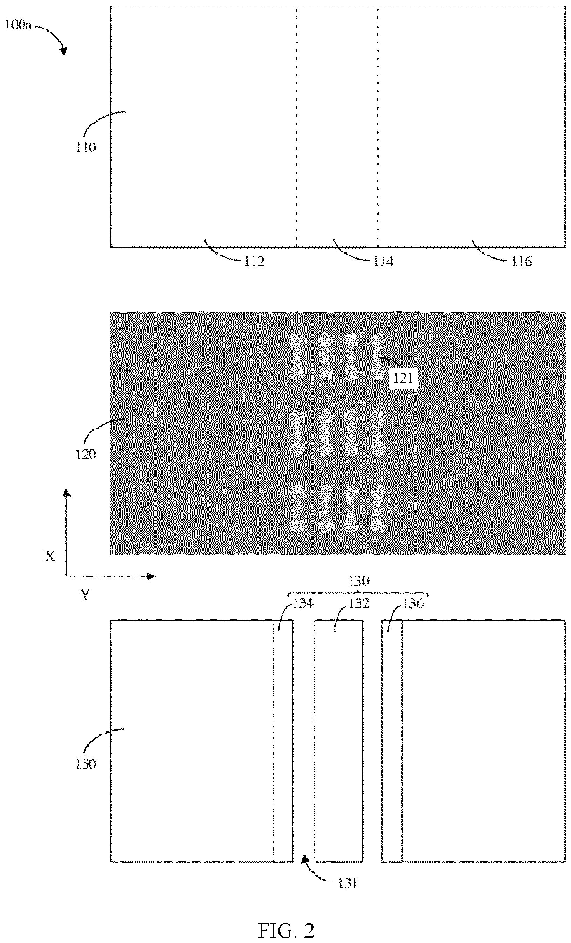

For ease of understanding, the embodiments are mainly described by using an example in which the electronic device is in an expanded state of 180°. As shown in FIG. 2, a width direction of the electronic device 100a is defined as a first direction X, a length direction of an electronic device 100a is defined as a second direction Y, and the first direction X is perpendicular to the second direction Y

For example, for a rectangular electronic device 100a, a width direction, or a first direction X, of the rectangular electronic device 100a is usually an extension direction of a side whose length is a smaller value. However, in some cases, based on an actual requirement, the first direction X of the rectangular electronic device 100a may alternatively be an extension direction of a side whose length is a greater or smaller value. For example, the electronic device 100a is a wall-mounted electronic device for which portability does not need to be considered and that has a large panel size. Therefore, the first direction X of the electronic device 100a may be determined based on a requirement, and this is not limited.

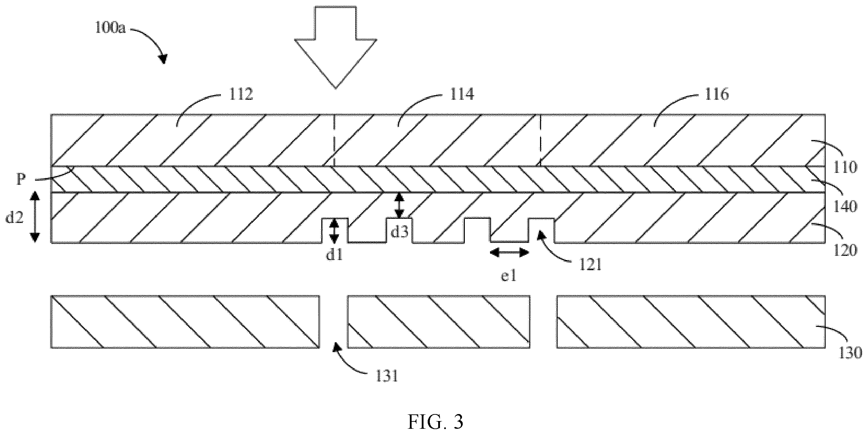

Refer to FIG. 2 and FIG. 3. In some embodiments, a rotating shaft 130 of the electronic device 100a may include a first support plate 132, a second support plate 134, and a third support plate 136. The first support plate 132 is disposed between the second support plate 134 and the third support plate 136, and both the second support plate 134 and the third support plate 136 are rotatably connected to the first support plate 132. Under an external force, the second support plate 134 and the third support plate 136 may rotate relative to the first support plate 132, so that the electronic device 100a can have a foldable function. It should be understood that, to implement rotation, there may be a gap 131 between the first support plate 132 and the second support plate 134 and a gap 131 between the first support plate 132 and the third support plate 136. In addition, there may also be a gap 131 on a surface of the first support plate 132, the second support plate 134, or the third support plate 136.

In some embodiments, the electronic device 100a may further include a middle frame 150, and the middle frame is fastened to or detachably connected to the rotating shaft 130. It should be understood that the middle frame 150 may support the flexible display panel 110, and may rotate synchronously with rotation of the rotating shaft 130.

Different from the foregoing conventional electronic device 1000, a back plate 120 of the electronic device 100a provided in this embodiment of this application is provided with a first blind hole 121, and the first blind hole 121 is located on a side of the back plate 120 and is far away from the flexible display panel 110. A surface of the flexible display panel 110 is used as a reference plane P, and a projection of the first blind hole 121 on the reference plane P at least partially overlaps a projection of the gap 131 of the rotating shaft 130 on the reference plane P. The surface of the flexible display panel 110 may be a light-emitting surface of the flexible display panel 110, or may be a surface of the flexible display panel 110 back the light. The light-emitting surface and the surface back the light are two surfaces of the flexible display panel 110 opposite to each other, and the light-emitting surface may be used for light emission to display a corresponding image. For ease of understanding, in the embodiments, the surface against the light of the flexible display panel 110 is mainly used as the reference plane P for description.

In some embodiments, compared with the foregoing back plate 1200 provided with the through hole 1210, the first blind hole 121 is provided on a side that is of the back plate 120 and that faces the rotating shaft 130, and does not communicate with a side that is of the back plate 120 and that faces the flexible display panel 110. It should be understood that, compared with the back plate 1200 provided with the through hole 1210, the back plate 120 provided with the first blind hole 121 may have higher rigidity, to maintain a large bending stress and a pressure-resistance capability.

In some other embodiments, the surface of the flexible display panel 110 is used as a reference plane P, and a projection of the first blind hole 121 on the reference plane P may cover a projection of the gap 131 of the rotating shaft 130 on the reference plane P; or a projection of the gap 131 of the rotating shaft 130 on the reference plane P may cover a projection of the first blind hole 121 on the reference plane P.

Refer to FIG. 3. In some embodiments, a depth d1 of the first blind hole 121 may be less than or equal to 195 µm, and a thickness d2 of the back plate 120 may be 30 µm to 200 µm. It should be understood that, when the back plate 120 is thinner, the depth of the first blind hole 121 is greater, and the bending stress of the back plate 120 is smaller; or when the back plate 120 is thicker, the depth of the first blind hole 121 is smaller, and the bending stress of the back plate 120 is greater. Therefore, a shape and the depth of the first blind hole 121, the thickness of the back plate 120, and the like are adjusted, so that the bending stress of the back plate 120 may be adaptively adjusted. Therefore, the back plate can be used in the electronic device 100a.

Refer to FIG. 3. In some embodiments, the depth d1 of the first blind hole 121 may be, for example, 10 µm, 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, or the like.

Refer to FIG. 3. In some embodiments, the thickness d2 of the back plate 120 may be, for example, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 195 µm, 200 µm, or the like. The thickness d2 is greater than the depth dl.

Refer to FIG. 3. In some embodiments, a thickness d3 of a region of the back plate 120 corresponding to the first blind hole 121 may be greater than or equal to 5 µm and less than 200 µm, where d1 + d3 = d2. d3 may be, for example, 5 µm, 10 µm, 20 µm, 30 µm, 40 µm, 50 µm, 60 µm, 70 µm, 80 µm, 90 µm, 100 µm, 110 µm, 120 µm, 130 µm, 140 µm, 150 µm, 160 µm, 170 µm, 180 µm, 190 µm, 195 µm, or the like.

Refer to FIG. 3. In some embodiments, a distance e1 between adjacent first blind holes 121 may be 5 µm to 100 µm. Based on this, the distance between the first blind holes is adjusted, so that the bending stress of the back plate may also be adaptively adjusted. Therefore, the back plate can be used in the electronic device.

In some embodiments, the distance e1 may be, for example, 5 µm, 10 µm, 20 µm, 30 µm, 40 µm, 50 µm, 60 µm, 70 µm, 80 µm, 90 µm, 100 µm, or the like.

Refer to FIG. 2 to FIG. 4. In some embodiments, in a first direction X of the back plate 120, the first blind hole 121 may include a first ring region 1211, a first connection region 1213, and a second ring region 1215 that are sequentially interconnected. In a second direction Y of the back plate 120, sizes of the first ring region 1211 and the second ring region 1215 are both greater than a size of the first connection region 1213. Based on this, the first ring region 1211 and the second ring region 1215 may release internal stress of the back plate 120, and the first connection region 1213 may reduce an overall perforating area of the first blind hole 121, to improve a pressure-resistance capability of the back plate 120.

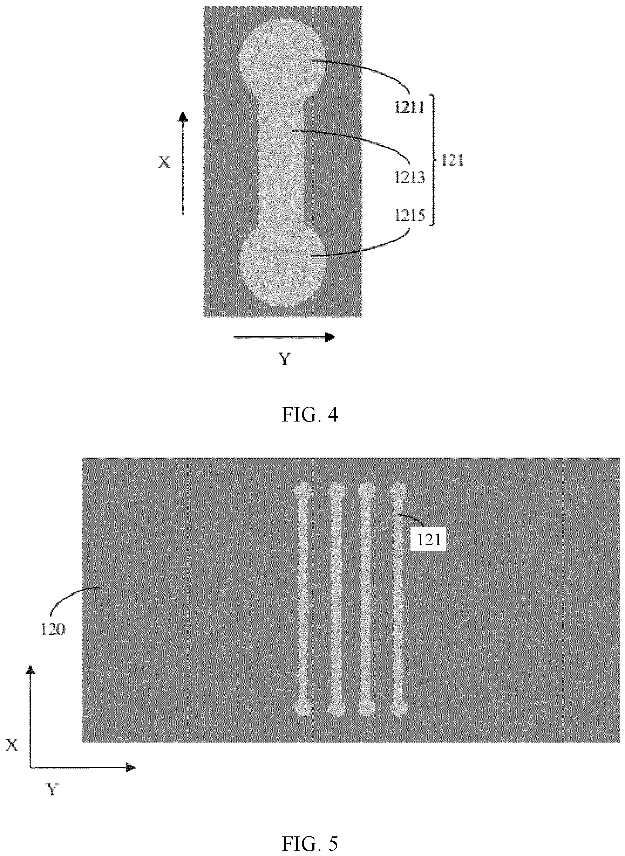

In some embodiments, the first ring region 1211 and the second ring region 1215 are in a same shape. As shown in FIG. 4, both the first ring region 1211 and the second ring region 1215 are circular, the first connection region 1213 is rectangular, and the first blind hole 121 is in a dumbbell shape as a whole.

In some other embodiments, shapes of the first ring region 1211 and the second ring region 1215 may alternatively be different. This is not limited herein. For example, both the first ring region 1211 and the second ring region 1215 are circular, with a diameter of the first ring region 1211 greater than a diameter of the second ring region 1215.

In some embodiments, one, two, or more first blind holes 121 may be provided on the back plate 120, corresponding to each gap 131 of the rotating shaft 130. This is not limited herein.

In some other embodiments, corresponding to each gap 131 of the rotating shaft 130, a quantity of first blind holes 121 is within 15, 20, or 25, and the first blind holes 121 may be successively provided in the first direction X.

In some embodiments, in the second direction Y, a plurality of columns of first blind holes 121 may be provided on the back plate 120, so that the back plate 120 has appropriate bending performance and an appropriate pressing-resistance performance.

As shown in FIG. 2, corresponding to one gap 131 of the rotating shaft 130, there are three first blind holes 121, and the three first blind holes 121 are spaced from each other in the first direction X. Refer to FIG. 5. In some other embodiments, corresponding to one gap 131 in the rotating shaft 130, there may alternatively be one first blind hole 121, and the first blind hole 121 extends in the first direction X, to adaptively reduce the bending stress of the back plate 120.

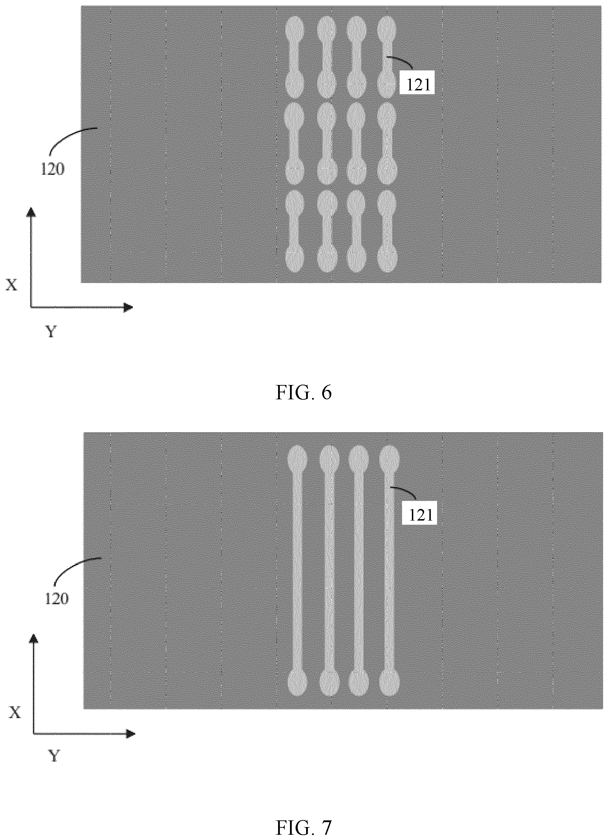

In some embodiments, the shape of the first blind hole 121 may include at least one of shapes such as a circle, a rectangle, a long strip, and an ellipse. The first blind hole 121 is used as an example. As shown in FIG. 6, the shape of the first blind hole 121 may be a composite shape with an ellipse and a rectangle; or as shown in FIG. 7, the shape of the first blind hole 121 may alternatively be a composite shape with an ellipse and a long strip. This is not limited herein.

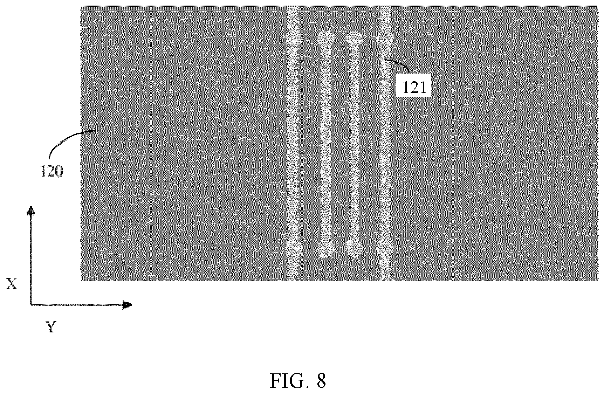

Refer to FIG. 8. In some other embodiments, the first blind hole 121 may alternatively extend to an edge of the back plate 120, and an extension direction of the first blind hole 121 is the same as the first direction X of the electronic device 100a.

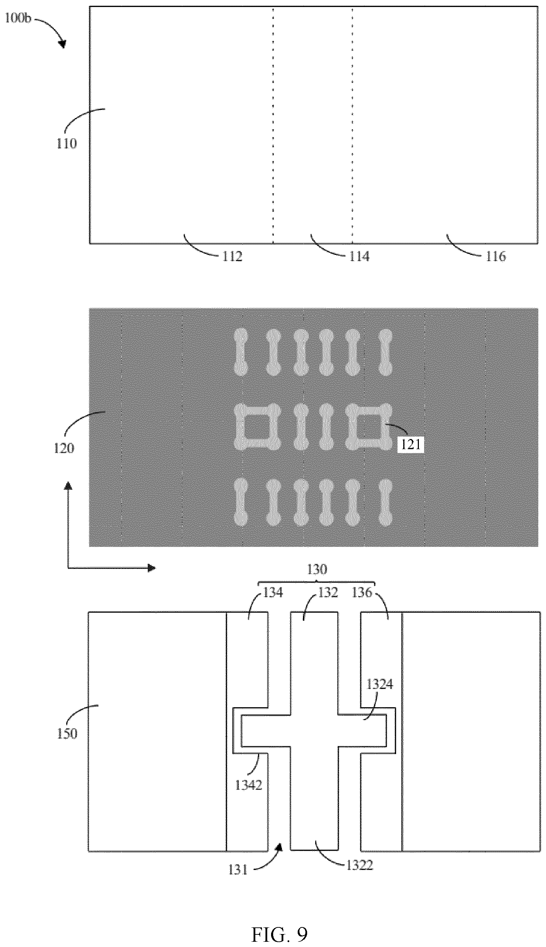

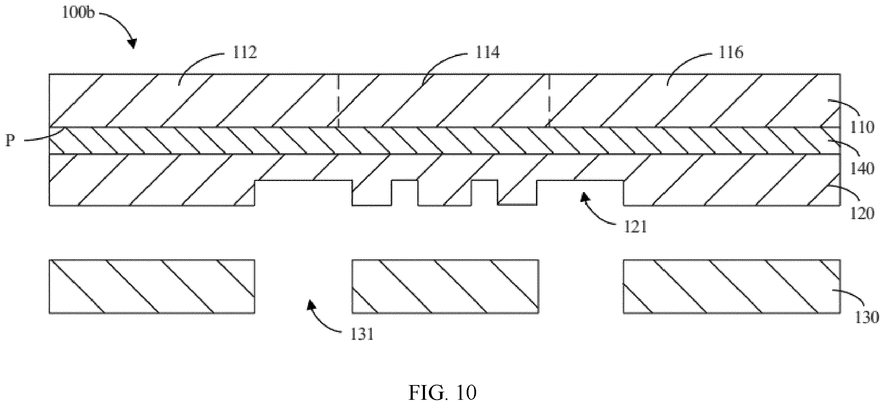

Refer to FIG. 9 and FIG. 10. This application further provides an electronic device 100b. Compared with the first support plate in the electronic device 100a, a first support plate 132 may include a main part 1322 and a rotating part 1324. The rotating part 1324 is located on a side of the main part 1322, and extends away from the main part 1322. As shown in FIG. 9, there are two rotating parts 1324, and the rotating parts 1324 may be configured to implement a rotating connection between structures such as the first support plate 132 and a second support plate 134.

In some embodiments, corresponding to the rotating part 1324 of the first support plate 132, the second support plate 134 is formed with an accommodating part 1342, and the accommodating part 1342 may accommodate the rotating part 1324, to implement the rotating connection between the first support plate 132 and the second support plate 134.

It should be understood that, based on a connection relationship between structures such as the rotating part 1324 of the first support plate 132 and the accommodating part 1342 of the second support plate 134, a gap 131 extending in a specific direction is formed between the first support plate 132 and the second support plate 134, and a first blind hole 121 may be provided at a corresponding position on the back plate 120 based on the extension direction of the gap 131. As shown in FIG. 10, a surface of a flexible display panel 110 is used as a reference plane P, and a projection of the first blind hole 121 on the reference plane P may cover a projection of the rotating part 1324 of the first support plate 132 on the reference plane P.

In some embodiments, a relationship between the third support plate 136 and the first support plate 132 may be understood by analogy with a relationship between the second support plate 134 and the first support plate 132. Details are not described herein again.

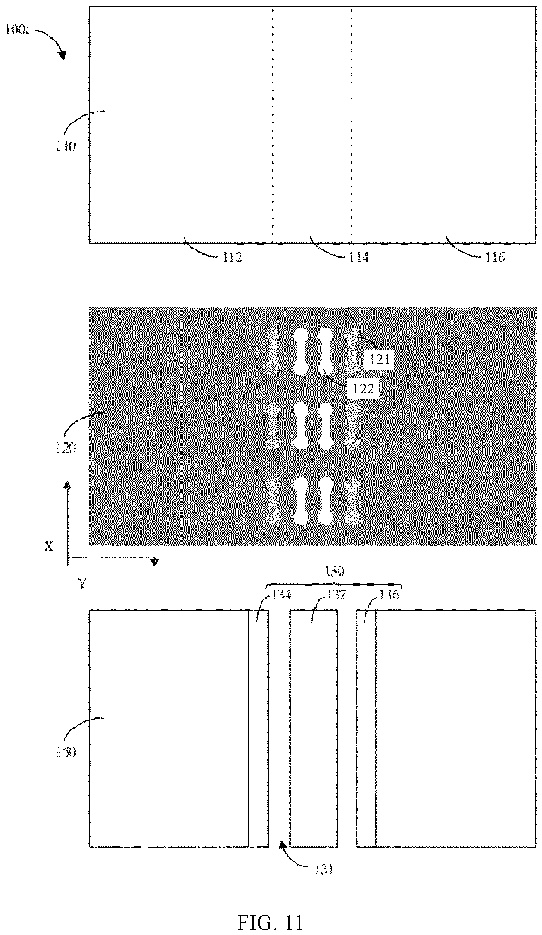

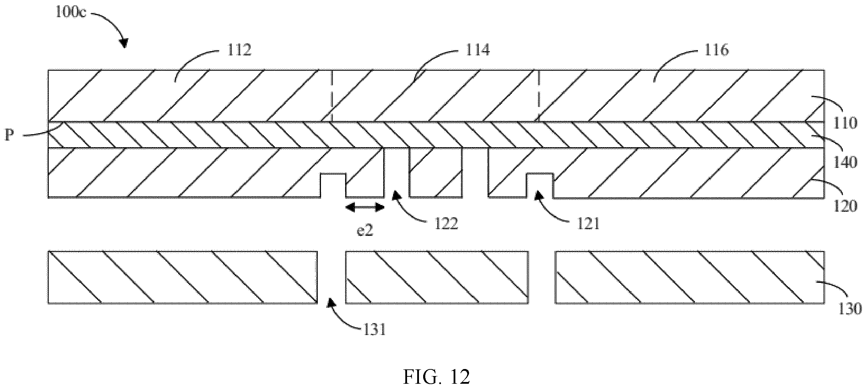

Refer to FIG. 11 and FIG. 12. An embodiment of this application further provides an electronic device 100c. Compared with the back plate in the electronic device (100a or 100b) provided in the foregoing embodiment, a back plate 120 of the electronic device 100c is further provided with a first through hole 122. The first through hole 122 and a first blind hole 121 are spaced from each other and are corresponding to a bending part 1140 of a flexible display panel 110, to further reduce a bending stress of the back plate 120. A surface of the flexible display panel 110 is used as a reference plane P, and a projection of the first through hole 122 on the reference plane P is spaced from a projection of a gap 131 on the reference plane P. In other words, a projection of a rotating shaft 130 on the reference plane P may cover a projection of the first through hole 122 on the reference plane P.

It should be understood that, compared with the back plate 1200 of the conventional electronic device 1000, a total area of the first through hole 122 on the back plate 120 provided in this embodiment of this application is smaller. Based on this, when a user presses a region that is of the flexible display panel 110 and that is corresponding to the first through hole 122, the rotating shaft 130 may provide support for the flexible display panel 110 to some extent, to avoid a broken bright dot, a black spot, a dead pixel, and other display detects on the flexible display panel 110, and improve a service life of the electronic device.

In addition, based on cooperation between the first blind hole 121 and the first through hole 122, a total perforating area on a side that is of the back plate 120 and that faces the flexible display panel 110 is small, that is, a surface that is of the back plate 120 and that faces the flexible display panel 110 is flat. Therefore, an OCA layer 140 can be further prevented from being squeezed into the back plate 120 to some extent, to avoid a horizontal stripe and other display detects on the electronic device 100c.

In some embodiments, a shape of the first through hole 122 may be the same as a shape of the first blind hole 121; or as shown in the descriptions of the shape of the first blind hole 121 above, the shape of the first through hole 122 may also include at least one of shapes such as a circle, a rectangle, a long strip, an ellipse, and the like. This is not limited herein.

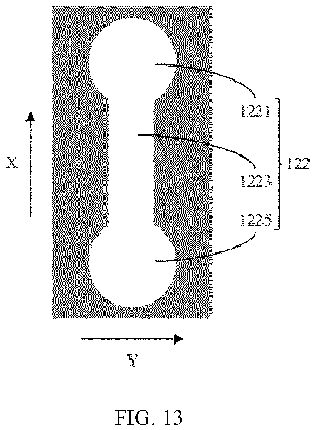

As shown in FIG. 13, similar to the first blind hole 121, the first through hole 122 may include a third ring region 1221, a second connection region 1223, and a fourth ring region 1225 that are sequentially connected. In a second direction Y of the back plate 120, sizes of the third ring region 1221 and the fourth ring region 1225 are both greater than a size of the second connection region 1223. In a process of bending the electronic device 100c, the third ring region 1221 and the fourth ring region 1225 may release internal stress of the back plate 120, to reduce a bending stress of the back plate 120. The second connection region 1223 may reduce an overall perforating area of the first through hole 122, to prevent the OCA layer 140 from being squeezed into the back plate 120 to some extent. This can avoid a horizontal stripe and other display detects on the electronic device 100c, and improve a service life of the electronic device.

Refer to FIG. 12. In some embodiments, a distance e2 between the first blind hole 121 and the first through hole 122 that are adjacent to each other may be 5 µm to 100 µm. Based on this, the distance between the first blind hole 121 and the first through hole 122 is adjusted, so that the bending stress of the back plate 120 may also be adaptively adjusted. Therefore, the back plate can be used in the electronic device.

In some embodiments, the distance e2 may be, for example, 5 µm, 10 µm, 20 µm, 30 µm, 40 µm, 50 µm, 60 µm, 70 µm, 80 µm, 90 µm, 100 µm, or the like.

Compared with the conventional back plate 1200 provided with a through hole 1210, the back plate 120 provided with the first blind hole 121 and the first through hole 122 provided in the foregoing embodiment may have an increase of approximate 3 kgf to 5 kgf (kilogram-force, kilogram-force) in terms of pressure-resistance capability, to better protect the flexible display panel 110 and prolong the service life of the electronic device 100c.

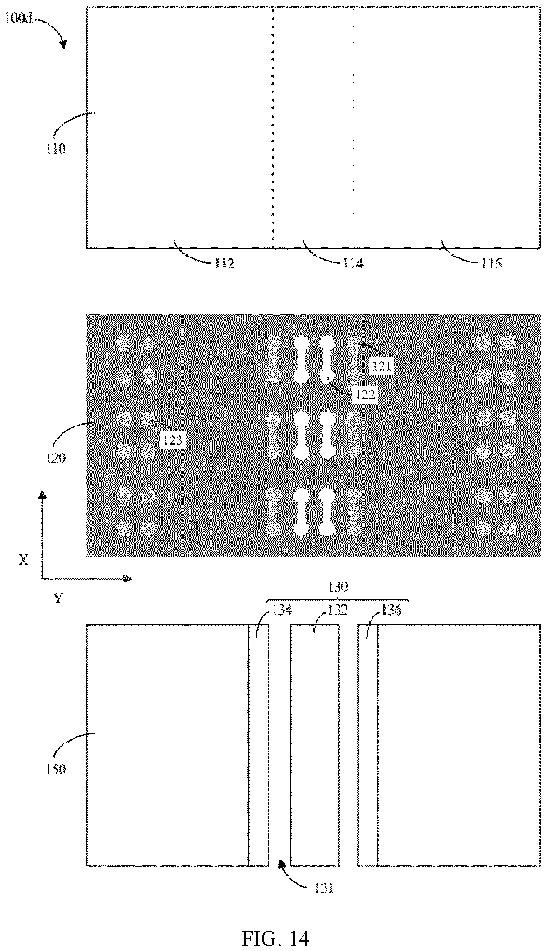

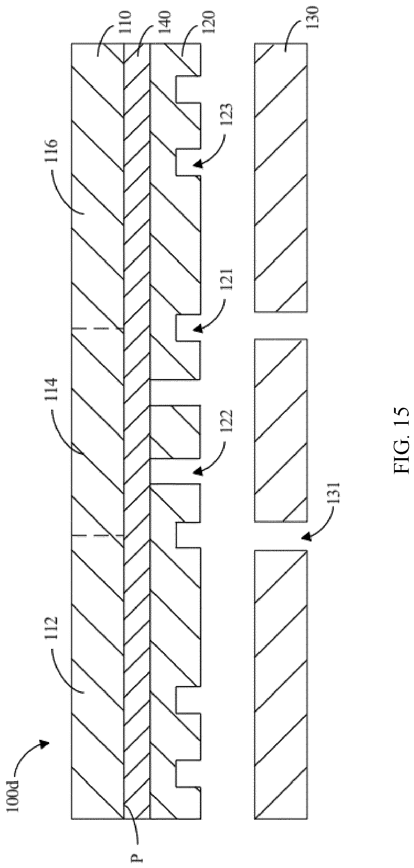

Refer to FIG. 14 and FIG. 15. Because a back plate 120 is thicker and may be heavier, in an electronic device 100d provided in an embodiment of this application, a second blind hole 123 may be further provided on the back plate 120, and the second blind hole 123 is provided on a side that is of the back plate 120 and that faces a rotating shaft 130. Different from the foregoing first blind hole 121, a flexible display panel 110 is used as a reference plane P, and a projection of the second blind hole 123 on the reference plane P is located on an expanding part (112 or 116) of the flexible display panel 110. It should be understood that, a weight of the back plate 120 may be reduced with the second blind hole 123, to implement lightweightness of the electronic device 100c and improve portability of the electronic device 100c.

In some embodiments, a shape of the second blind hole 123 may be the same as a shape of the first blind hole 121. For example, parameters such as the shape and a depth of the second blind hole 123 are consistent with the shape and a depth of the first blind hole 121.

In some other embodiments, the shape of the second blind hole 123 may include at least one of shapes such as a circle, a rectangle, a long strip, and an ellipse, and is not required to be consistent with the shape of the first blind hole 121. This is not limited herein. It should be understood that the first blind hole 121 and the second blind hole 123 may be designed into having different shapes, depths, and cross-sectional shapes, to correspondingly meet requirements of the electronic device 100c on bending, pressure resistance, impact reliability, and the like.

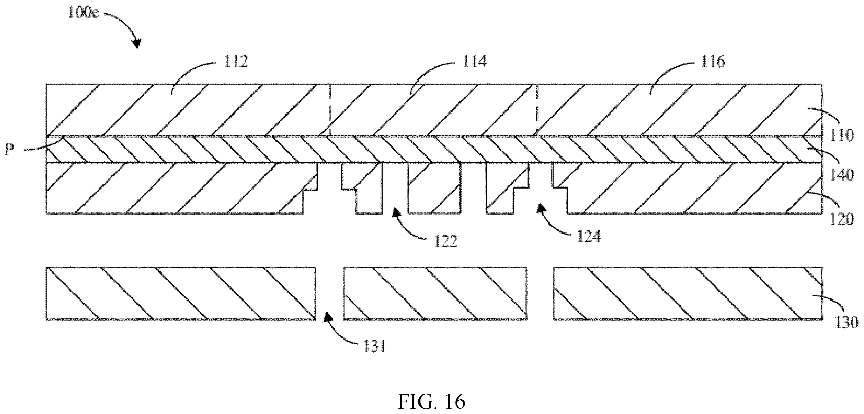

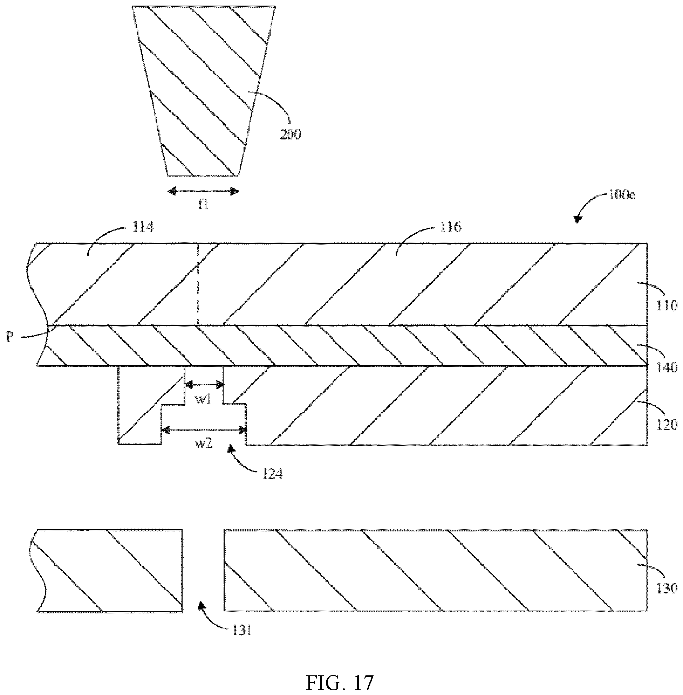

Refer to FIG. 16 and FIG. 17. Compared with the electronic devices (100a to 100d) in the foregoing embodiments, an embodiment of this application further provides another electronic device 100e. In the electronic device 100e, the first blind hole 121 is adjusted to a second through hole 124. Different from the through hole 1210 of the conventional back plate 1200, in a direction from a flexible display panel 110 to a rotating shaft 130, the second through hole 124 has a first diameter w1 and a second diameter w2 that are opposite to each other, and the first diameter w1 is less than the second diameter w2. Based on this, compared with the first blind hole 121, the second through hole 124 may further reduce a local stress when a back plate 120 is bent, to facilitate bending of the back plate 120.

For a manufacturing process, the structure of the second through hole 124 may also be understood as that a through hole is provided at the bottom of the first blind hole 121, to further reduce a local stress when the back plate 120 is bent. For example, operations such as exposing, developing, and etching are performed again on the basis of the first blind hole 121 to form the second through hole 124.

In some embodiments, the first diameter w1 of the second through hole 124 is less than or equal to 300 µm (that is, 0.3 mm), and the size of the second diameter w2 may be adaptively adjusted based on a bending stress, a pressure-resistance capability, and the like of the back plate 120, which is not limited herein.

In some embodiments, the first diameter w1 of the second through hole 124 may be, for example, 10 µm, 20 µm, 30 µm, 40 µm, 50 µm, 60 µm, 70 µm, 80 µm, 90 µm, 100 µm, 120 µm, 140 µm, 160 µm, 180 µm, 200 µm, 220 µm, 240 µm, 260 µm, 280 µm, or the like.

It should be understood that a thickness f1 of a fingernail 200 of a finger of a user is usually 0.3 mm to 0.8 mm, and the value is usually greater than the first diameter w1 of the second through hole 124. Based on this, when the user performs a touch operation, even if the fingernail of the finger of the user touches a region that is of the flexible display panel 110 and that is corresponding to the second through hole 124, the back plate 120 can still provide support for the flexible display panel 110 to some extent, to avoid a broken bright dot, a black spot, a dead pixel, and other display detects on the flexible display panel 110, and improve a service life of the electronic device 100e.

In some embodiments, because the first diameter w1 of the second through hole 124 is small, in a process in which the user touches or folds the electronic device 100e, an OCA layer 140 does not tend to be squeezed into the back plate 120 through the second through hole 124, to avoid a horizontal strip and other display detects on the electronic device 100e.

In some embodiments, a surface of the flexible display panel 110 is used as a reference plane P, and a projection of the second through hole 124 on the reference plane P may alternatively be located on an expanding part or a bending part of the flexible display panel 110. In this way, a weight of the back plate 120 can be reduced, so that the back plate can be used in the electronic device 100e. In some other embodiments, the foregoing second blind hole 123 may alternatively be provided in a region that is of the back plate 120 and that is corresponding to the expanding part (112 or 116), or the second through hole 124 and the foregoing second blind hole 123 are provided in a region that is of the back plate 120 and that is corresponding to the expanding part (112 or 116). Because a thickness of a part of the back plate 120 is reduced or is hollowed out, a weight of the back plate 120 may also be reduced.

In some embodiments, the back plate 120 may be a metal back plate 120. For example, the metal back plate 120 may include a material such as steel, nickel, titanium, aluminum, or copper alloy; or the metal back plate 120 may include a metal matrix composite material (for example, Al-SiC), a multilayer metal composite material (for example, Al-Cu or SUS-Al-SUS), or the like. This is not limited herein.

In some other embodiments, the back plate 120 may be a non-metal back plate 120. For example, the non-metal back plate 120 may include a material such as resin or glass fiber, which is not limited herein.

In some embodiments, a shape or a diameter of a blind hole (121 or 123) is adjusted, and a shape or a diameter of a through hole (122 or 124) is adjusted, so that a pressure-resistance capability and a bending stress of the back plate 120 can be adaptively adjusted while support and protection effect for the flexible display panel 110 are ensured, to meet a bending requirement of the electronic device 100e.

It should be understood that, quantities and sizes of blind holes (121 and 123) and through holes (122 and 124) in the accompanying drawings are used as examples. In actual application, the quantities and sizes of blind holes (121 and 123) and the through holes (122 and 124) may be adjusted based on actual requirements, which are not limited herein.

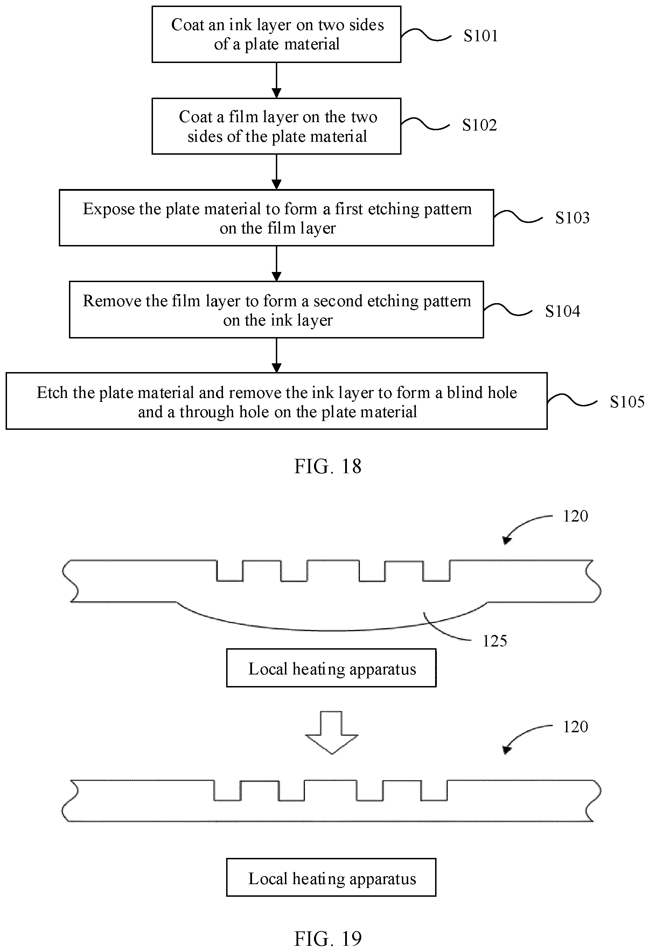

Refer to FIG. 18. To form the blind hole (121 or 123) and the through hole (122 or 124) on the back plate 120, an embodiment of this application further provides a method for processing the back plate 120. The method includes but is not limited to the following steps.

S101: Coat an ink layer on two sides of a plate material.

It should be understood that the plate material may be a metal plate material, a non-metal plate material, or the like. A coating manner of the ink layer may be, for example, spraying and silk screening or pad printing, which is not limited herein.

S102: Coat a film layer on the two sides of the plate material.

The film layer is coated on the ink layer and is away from the plate material. Correspondingly, the two sides of the plate material are coated with the ink layer and the film layer.

S103: Expose the plate material to form a first etching pattern on the film layer.

Each of the two sides of the plate material is provided with a film layer, and first etching patterns of the two film layers are different, so that the plate material can correspondingly form the blind hole (121 or 123) and the through hole (122 or 124) in a subsequent processing procedure.

S104: Remove the film layer to form a second etching pattern on the ink layer.

It should be understood that, based on the first etching pattern, some ink of the ink layer may be further removed, to form the second etching pattern. For a film layer and an ink layer that are located on a same side of the plate material, a corresponding first etching pattern and a corresponding second etching pattern are the same.

S105: Etch the plate material and remove the ink layer to form a blind hole and a through hole on the plate material.

In some embodiments, the plate material obtained after step S105 has a large size. Therefore, the plate material may be cut to form one, two, or more back plates 120.

In some other embodiments, the plate material obtained after step S105 has a same size as a size of the back plate 120, and therefore the plate material may be used as the back plate 120.

For the electronic devices (100a to 100e) described in the foregoing embodiments, the back plate 120 of the electronic device may be a metal back plate 120 formed by a metal plate material. Because a metal plate material is usually formed by using a rolling process, a tensile stress exists on a surface of the metal plate material corresponding to such process. After the foregoing etching process is performed, an etched surface of the metal plate material releases internal stress, but a surface that is of the metal plate material and that is not etched or that is less etched still reserves large internal stress. Consequently, a finally formed metal back plate 120 may have an arched part 125. The arched part 125 affects performance such as bending and pressing resistance of the back plate 120, and is not conducive to using the back plate 120 in the electronic device 100e.

Refer to FIG. 19. To solve the problem, in some embodiments, the foregoing processing method may further include the following steps: Performing local annealing on the arched part 125 of the back plate, where an annealing temperature is 0.5 Tb, and Tb is a metal recrystallization temperature.

It should be understood that, based on the foregoing step S201, a local heating apparatus may be placed at the arched part 125 of the back plate 120 to perform local annealing. The local heating apparatus may be, for example, a zone melting furnace, to effectively release the internal stress of the back plate 120 to eliminate the arched part 125 of the back plate 120.

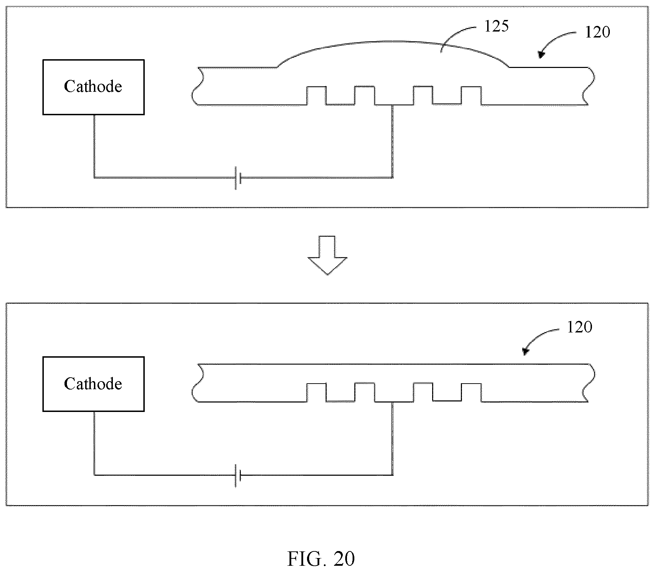

Refer to FIG. 20. In some other embodiments, different from the foregoing local annealing manner, the processing method may alternatively include the following step: Use a stainless steel electrode as a cathode and the back plate 120 as an anode, and place the back plate 120 into an electrolyte for electrolysis, where the electrolyte includes perchloric acid and acetic acid, and perchloric acid:acetic acid = 1: 15.

The arched part 125 of the back plate 120 has a larger contact area with the electrolyte, and a reaction speed is greater than a reaction speed of another region of the back plate 120. Therefore, the arched part 125 of the back plate 120 may be eliminated through reaction.

## Claims

1. An electronic device, comprising a flexible display panel, a back plate, and a rotating shaft, wherein the back plate is disposed between the flexible display panel and the rotating shaft;
the flexible display panel comprises an expanding part and a bending part that are connected to each other, and the bending part is configured to implement bending of the flexible display panel;
the back plate is provided with a first blind hole, and the first blind hole is provided on a side of the back plate and is far away from the flexible display panel; and
the rotating shaft is provided with a gap; and a surface of the flexible display panel is used as a reference plane, and a projection of the first blind hole on the reference plane at least partially overlaps a projection of the gap on the reference plane.

2. The electronic device according to claim 1, wherein a thickness of the back plate is 30 µm to 200 µm, and a depth of the first blind hole is less than or equal to 195 µm.

3. The electronic device according to claim 1, wherein in a first direction, the first blind hole comprises a first ring region, a first connection region, and a second ring region that are sequentially interconnected, and the first direction is a length direction of the electronic device; and in a second direction, sizes of the first ring region and the second ring region are both greater than a size of the first connection region, and the second direction is perpendicular to the first direction.

4. The electronic device according to claim 1, wherein the back plate is further provided with a first through hole, and the first through hole and the first blind hole are spaced from each other; and the surface of the flexible display panel is used as a reference plane, and a projection of the first through hole on the reference plane is spaced from the projection of the gap on the reference plane.

5. The electronic device according to claim 4, wherein the surface of the flexible display panel is used as a reference plane, and a projection of the first through hole on the reference plane is located within the bending part of the flexible display panel.

6. The electronic device according to claim 4, wherein a distance between the first blind hole and the first through hole that are adjacent to each other is 5 µm to 100 µm.

7. The electronic device according to any one of claims 1 to 6, wherein the back plate is further provided with a second blind hole, and the second blind hole is located on a side of the back plate and is far away from the flexible display panel; and the surface of the flexible display panel is used as a reference plane, and a projection of the second blind hole on the reference plane is located within the expanding part.

8. The electronic device according to any one of claims 1 to 7, wherein the back plate is further provided with a second through hole, the second through hole has a first diameter and a second diameter in a direction from the flexible display panel to the rotating shaft, and the first diameter is less than the second diameter.

9. The electronic device according to claim 8, wherein the first diameter is less than or equal to 300 µm.

10. An electronic device, comprising a flexible display panel, a back plate, and a rotating shaft, wherein the back plate is disposed between the flexible display panel and the rotating shaft;
the flexible display panel comprises an expanding part and a bending part that are connected to each other, and the bending part is configured to implement bending of the flexible display panel;
the back plate is provided with a second through hole, the second through hole is provided on a side of the back plate and is far away from the flexible display panel, the second through hole has a first diameter and a second diameter in a direction from the flexible display panel to the rotating shaft, and the first diameter is less than the second diameter; and
the rotating shaft is provided with a gap; and a surface of the flexible display panel is used as a reference plane, and a projection of the second through hole on the reference plane at least partially overlaps a projection of the gap on the reference plane.

11. The electronic device according to claim 10, wherein the first diameter of the second through hole is less than or equal to 300 µm.

12. The electronic device according to claim 10 or 11, wherein the surface of the flexible display panel is used as a reference plane, and the projection of the second through hole on the reference plane is located within the bending part.

13. The electronic device according to claim 10 or 11, wherein the surface of the flexible display panel is used as a reference plane, and the projection of the second through hole on the reference plane is alternatively located within the expanding part.

14. The electronic device according to claim 10, wherein the back plate is further provided with a second blind hole, and the second blind hole is located on a side of the back plate and is far away from the flexible display panel; and the surface of the flexible display panel is used as a reference plane, and a projection of the second blind hole on the reference plane is located within the expanding part.
